# FASCICULE DE BREVET EUROPEEN

(11) **EP 0 838 918 B1**
(45) Date de publication et mention de la délivrance du brevet: **14.06.2006**
(21) Numéro de dépôt: 97402400.2
(22) Date de dépôt: 13.10.1997
(51) Int. Cl.: H04J 14/02, G02B 6/293, H04B 10/213, H04Q 11/00

(54) **Dispositif d'extraction-insertion de canaux de multiplex de longueurs d'onde**
Vorrichtung zum Ein-und Ausfügen von Wellenlängenmultiplexkanälen
Device for add-dropping wavelength multiplexed channels

(30) Priorité: 24.10.1996 FR 9612976
(43) Date de publication de la demande: 29.04.1998
(73) Titulaire: ALCATEL, 75008 Paris (FR)
(72) Inventeur: Sotom, Michel, 75015 Paris (FR); Sansonetti, Pierre, 91120 Palaiseau (FR); Jourdan, Amaury, 92310 Sevres (FR); Soulage, Guy, 94400 Vitry sur Seine (FR); Bruyere, Franck, 75014 Paris (FR)
(74) Mandataire: Fournier, Michel Robert Marie

(56) Documents cités:
- EP-A- 0 687 085
- MILAN KOVACEVIC ET AL: "ELECTRONIC WAVELENGTH TRANSLATION IN OPTICAL NETWORKS" GLOBECOM '95. IEEE GLOBAL TELECOMMUNICATIONS CONFERENCE, SINGAPORE, NOV. 14 - 16, 1995, vol. 3 OF 3, 14 novembre 1995, INSTITUTE OF ELECTRICAL AND ELECTRONICS ENGINEERS, pages 2182-2187, XP000633672
- KITAYAMA K-I: "SUBARRIER MULTIPLEXING BASED SIGNALING AND ACCESS CONTROL IN OPTICAL FDM NETWORKS" GLOBECOM '95. IEEE GLOBAL TELECOMMUNICATIONS CONFERENCE, SINGAPORE, NOV. 14 - 16, 1995, vol. 3 OF 3, 14 novembre 1995, INSTITUTE OF ELECTRICAL AND ELECTRONICS ENGINEERS, pages 1996-2002, XP000633637
- JONES K P ET AL: "OPTICAL WAVELENGTH ADD-DROP MULTIPLEXER IN INSTALLED SUBMARINE WDM NETWORK" ELECTRONICS LETTERS, vol. 31, no. 24, 23 novembre 1995, pages 2117-2118, XP000548194
- CHAWKI M J ET AL: "EVALUATION OF AN OPTICAL BOOSTED ADD/DROP MULTIPLEXER OBADM INCLUDING CIRCULATORS AND FIBER GRATING FILTERS" PROCEEDINGS OF THE 21ST EUROPEAN CONFERENCE ON OPTICAL COMMUNICATION, 17 septembre 1995, BRUSSELS, pages 47-50, XP002032556
- FROWIN DER ET AL: "AN OPTICAL INFRASTRUCTURE FOR FURURE TELECOMMUNICATIONS NETWORKS" IEEE COMMUNICATIONS MAGAZINE, vol. 33, no. 11, 1 novembre 1995, pages 84-88, XP000545290

## Description

L'invention se situe dans le domaine des transmissions optiques utilisant des multiplex de longueurs d'onde. Elle concerne plus particulièrement un dispositif permettant d'extraire et/ou d'insérer sélectivement un ou plusieurs canaux de ce multiplex. Un tel dispositif est habituellement appelé multiplexeur d'extraction-insertion.

Dans les systèmes de transmission utilisant le multiplexage en longueur d'onde, plusieurs canaux peuvent être véhiculés simultanément sur une même fibre, chacun de ces canaux étant porté par une onde associée ayant une longueur d'onde centrale et une largeur de bande déterminées. Pour réaliser des fonctions de routage ou d'aiguillage, il est souvent nécessaire d'extraire certains canaux et de modifier le multiplex, par exemple pour modifier les informations d'un ou de plusieurs canaux ou pour remplacer la longueur d'onde portant une information par une autre longueur d'onde.

Pour résoudre ce problème, une solution classique consiste à utiliser un démultiplexeur dont les sorties sont reliées à un multiplexeur par l'intermédiaire de moyens de commutation prévus pour extraire et insérer sélectivement une ou plusieurs longueurs d'onde du multiplex reçu. Cette solution présente cependant l'inconvénient de ne pouvoir fonctionner qu'avec un multiplex formé de longueurs d'onde bien déterminées. Un autre inconvénient est que l'on introduit un élément actif, le commutateur, dans le trajet principal entre l'entrée et la sortie multiplexée du dispositif. L'ensemble des signaux est donc interrompu pendant le changement d'état du commutateur ou en cas de défaillance de ce commutateur.

Il existe d'autres solutions utilisant par exemple des filtres accordables ou des filtres fixes associés à des commutateurs. Toutes ces solutions présentent également l'inconvénient d'introduire un élément actif dans le trajet principal.

Le document CHAWKI M J ET AL: 'EVALUATION OF AN OPTICAL BOOSTED ADD/DROP MULTIPLEXER OBADM INCLUDING CIRCULATORS AND FIBER GRATING FILTERS' PROCEEDINGS OF THE 21 ST EUROPEAN CONFERENCE ON OPTICAL COMMUNICATION, 17 septembre 1995, BRUSSELS, pages 47-50, XP002032556, décrit un dispositif selon le préambule de la revendication 1.

Le document MILAN KOVACEVIC ET AL: 'ELECTRONIC WAVELENGTH TRANSLATION IN OPTICAL NETWORKS' GLOBECOM '95. IEEE GLOBAL TELECOMMUNICATIONS CONFERENCE, SINGAPORE, NOV. 14 - 16, 1995, vol. 3 OF 3, 14 novembre 1995, INSTITUTE OF ELECTRICAL AND ELECTRONICS ENGINEERS, pages 2182-2187, XP000633672, décrit un système utilisant des convertisseurs électroniques de longueur d'onde pour améliorer la performance d'un réseau optique à multiplexage de longueur d'onde.

Le document KITAYAMA K-I: 'SUBARRIER MULTIPLEXING BASED SIGNALING AND ACCESS CONTROL IN OPTICAL FDM NETWORKS' GLOBECOM '95. IEEE GLOBAL TELECOMMUNICATIONS CONFERENCE, SINGAPORE, NOV. 14 - 16, 1995, vol. 3 OF 3, 14 novembre 1995, INSTITUTE OF ELECTRICAL AND ELECTRONICS ENGINEERS, pages 1996-2002, XP000633637, décrit un multiplexeur d'extraction-insertion utilisant un multiplexeur démultiplexeur de type AWG (arrayed waveguide grating) permettant de réaliser la fonction d'extraction sélective pour plusieurs longueurs d'onde.

L'invention a pour but de remédier aux inconvénients des solutions connues. Plus précisément, l'invention a pour objet un dispositif selon la revendication 1.

L'invention peut être utilisée avantageusement pour effectuer des transferts de canaux entre plusieurs multiplex. Aussi, selon un autre aspect de l'invention, les moyens de commutation sont aptes à coupler sélectivement au moins une entrée d'extraction reliée à l'un des modules d'un des multiplex à au moins une sortie d'insertion reliée à l'un des modules d'un autre multiplex.

Pour permettre à la fois l'extraction des informations portées par une ou plusieurs longueurs d'onde et l'insertion d'informations portées par les mêmes longueurs d'onde, le dispositif est en outre caractérisé en ce que lesdits moyens de commutation comprennent au moins une entrée d'insertion pouvant être couplée sélectivement à au moins une sortie d'insertion.

Avantageusement, l'une au moins des sorties d'insertion du commutateur est reliée au port d'insertion d'un des modules par l'intermédiaire d'un convertisseur de longueur d'onde fournissant au moins une longueur d'onde contenue dans la bande de réjection du filtre dudit module.

Cette dernière disposition présente l'avantage de pouvoir introduire dans un multiplex des informations portées par une longueur d'onde déterminée à partir d'un signal porté par une longueur d'onde différente.

D'autres aspects et avantages de l'invention apparaîtront dans la suite de la description en référence aux figures.
- Les figures 1 et 2 représentent deux exemples de réalisation de modules d'extraction et d'insertion utilisables dans le dispositif selon l'invention.
- La figure 3 représente un mode de réalisation du dispositif selon l'invention dans lequel on utilise un seul module.
- La figure 4 représente un autre exemple de réalisation de l'invention selon lequel on utilise plusieurs modules pour un même multiplex.
- La figure 5 représente un mode de réalisation du dispositif selon l'invention selon lequel on utilise plusieurs modules pour plusieurs multiplex.

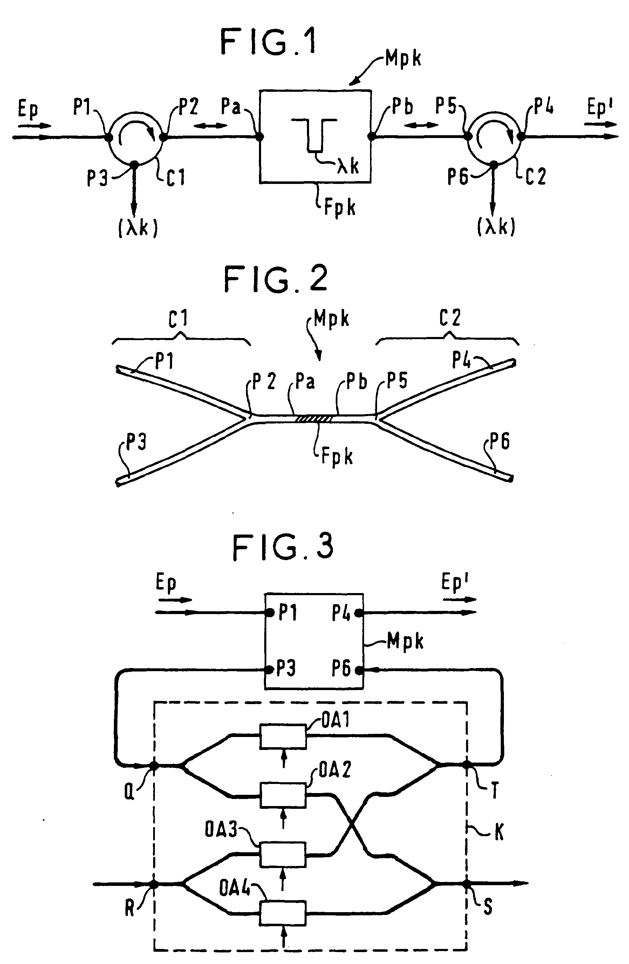

La figure 1 représente un mode de réalisation d'un module d'extraction/insertion Mpk utilisable pour la mise en oeuvre de l'invention. Il est essentiellement constitué d'un filtre réjecteur Fpk muni de deux ports opposés Pa, Pb. Les ports Pa et Pb sont couplés respectivement à des moyens de couplage d'entrée C1 et de sortie C2. Dans l'exemple représenté, ces moyens de couplage sont des circulateurs à trois ports. Le circulateur d'entrée C1 comporte un port d'entrée P1 apte à recevoir un multiplex Ep. Un second port P2 est couplé au port Pa du filtre Fpk. Un troisième port P3 constitue un port d'extraction. Le circulateur C1 est disposé de façon à permettre l'introduction du multiplex d'entrée Ep dans le filtre Fpk par le premier port Pa, tandis que l'onde réfléchie par le filtre Fpk et sortant par ce même port Pa peut être prélevée par le port d'extraction P3.

De la même façon, le circulateur de sortie C2 comporte un premier port P5 couplé au filtre Fpk par le second port Pb. Un second port P4 du circulateur C2 permet de prélever l'onde sortant du filtre par le port Pb. Le port P4 constitue un port de sortie permettant de prélever un multiplex de sortie Ep' . Le circulateur C2 possède enfin un troisième port P6 qui constitue un port d'insertion.

Le filtre Fpk est choisi pour présenter une bande de réjection centrée sur au moins une des longueurs d'onde λk du multiplex. Selon les besoins, le filtre peut être constitué d'un élément unique rejetant une bande de longueur d'onde recouvrant la longueur d'onde d'un seul canal ou les longueurs d'onde de plusieurs canaux voisins. Il peut être aussi constitué de plusieurs éléments calés sur les longueurs d'onde de plusieurs canaux voisins ou non.

En fonctionnement, un multiplex d'entrée Ep est introduit par le port d'entrée P1. Les canaux du multiplex Ep portés par les longueur d'onde rejetées par le filtre sont extraits du multiplex de sortie Ep' et sont accessibles par le port d'extraction P3. D'autre part, en injectant par le port d'insertion P6 de nouveaux canaux portés par ces mêmes longueurs d'onde, on insère ces nouveaux canaux dans le multiplex de sortie Ep'.

La figure 2 représente une variante de réalisation du module Mpk utilisant un coupleur sélectif en longueur d'onde. Il est essentiellement constitué d'un coupleur optique dont la région de couplage est munie d'un réseau de Bragg photo-inscrit et conçu pour présenter une bande de réjection souhaitée. Le principe de fonctionnement de ce dispositif est analogue à celui du dispositif de la figure
1. Une description détaillée d'un coupleur sélectif en longueur d'onde est donnée dans la demande de brevet français FR-A-2725529 déposée sous n° 9412112.

La figure 3 représente un dispositif utilisable pour la mise en oeuvre de l'invention. Le module d'extraction et d'insertion Mpk précédemment décrit est associé à un commutateur optique K comportant deux entrées Q, R et deux sorties T, S. Le port d'extraction P3 du module Mpk est couplé à l'entrée Q, appelée "entrée d'extraction" du commutateur K. Le port d'insertion P6 du module Mpk est couplé à la sortie T, appelée "sortie d'insertion" du commutateur K. Le commutateur K est d'abord conçu pour pouvoir coupler sélectivement son entrée d'extraction Q à sa sortie d'insertion T et/ou à son autre sortie S, appelée "sortie d'extraction". D'autre part, pour réaliser la fonction d'insertion, la seconde entrée R, appelée "entrée d'insertion", peut être couplée sélectivement à la sortie d'insertion T. Le port d'entrée P1 du module Mpk est prévu pour recevoir un multiplex d'entrée Ep tandis que le port de sortie P4 fournit un multiplex de sortie Ep'.

Comme représenté sur la figure 3 à titre d'exemple, le commutateur K est réalisé au moyen de quatre amplificateurs optiques OA1-OA4 utilisés comme portes optiques. L'entrée d'extraction Q est reliée aux sorties T et S, respectivement par l'intermédiaire des amplificateurs OA1 et OA2. L'entrée d'insertion R est également couplée aux sorties T et S, respectivement par l'intermédiaire de deux autres amplificateurs OA3 et OA4. Chaque amplificateur peut être activé sélectivement par une commande extérieure non référencée. Cette commande peut être électrique dans le cas où il s'agit d'amplificateurs optiques semi-conducteurs. La commande peut aussi être optique, par exemple sous la forme d'ondes de pompe dans le cas d'amplificateurs à fibre.

Le dispositif permet plusieurs modes de fonctionnement. Dans le cas où l'amplificateur OA1 est seul actif, l'entrée Q et la sortie T sont couplées, ce qui permet un rebouclage du port d'extraction P3 sur le port d'insertion P6 du module Mpk. Le dispositif est alors transparent à l'égard du multiplex d'entrée Ep. Si en outre le second amplificateur OA2 est activé, l'entrée d'extraction Q est alors couplée à la sortie d'extraction S. Le dispositif reste alors transparent pour le multiplex Ep mais permet l'extraction sélective du ou des canaux portés par des longueurs d'onde contenues dans la bande de réjection du filtre. Si seuls les amplificateurs OA2 et OA3 sont actifs, on réalise encore l'extraction par la sortie S des canaux réfléchis par le filtre, mais l'information ainsi extraite peut être modifiée en injectant par l'entrée d'insertion R d'autres informations portées par la ou les longueurs d'onde de réjection du filtre. Optionnellement, on peut activer les amplificateurs OA3 et OA4, ce qui permet l'insertion de nouvelles données tout en autorisant un contrôle du fonctionnement par une surveillance des ondes émises par la sortie d'extraction S.

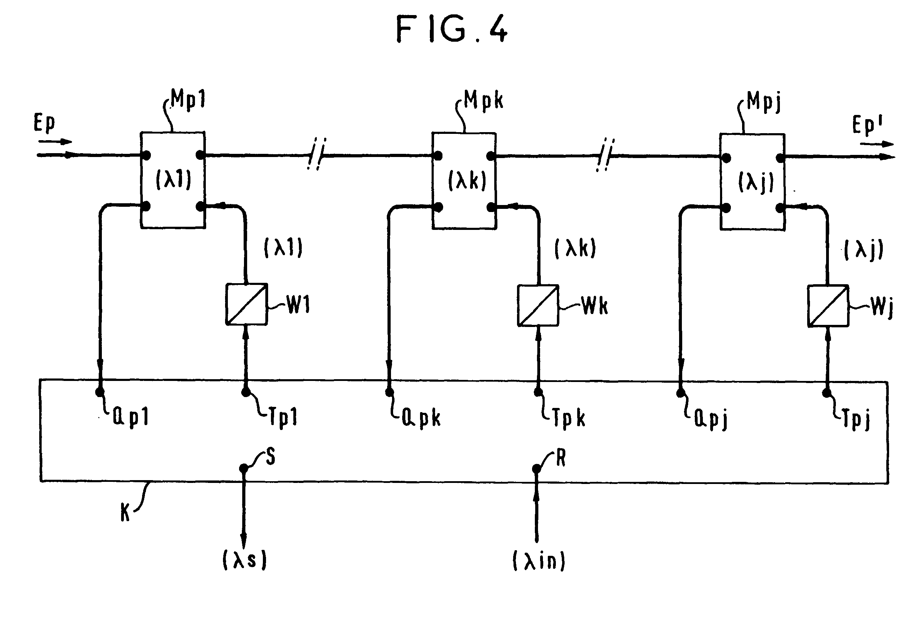

Selon un mode de réalisation de l'invention représenté à la figure 4, on a prévu plusieurs modules d'extraction et d'insertion Mp1, Mpk, Mpj. Ces modules sont normalement munis de filtres ayant des bandes de réjection complémentaires de façon par exemple à contenir respectivement les différentes longueurs d'onde λ1, λk, λj, des porteuses du multiplex Ep.

Les modules Mp1, Mpk, Mpj sont montés en cascade de sorte que le port de sortie d'un des modules soit relié au port d'entrée du module suivant, le premier module Mp1 recevant par son port d'entrée le multiplex d'entrée Ep et le dernier module Mpj fournissant par son port de sortie le multiplex de sortie Ep'.

Un commutateur optique K comporte une pluralité d'entrées d'extraction Qp1, Qpk, Qpj couplées respectivement aux ports d'extraction des différents modules. Il comporte également une pluralité de sorties d'insertion Tp1, Tpk, Tpj couplée respectivement aux ports d'insertion des modules. Le commutateur K comporte enfin au moins une sortie d'extraction S et au moins une entrée d'insertion R.

Le commutateur K est conçu pour être placé en fonction d'une commande non représentée dans plusieurs états permettant divers modes de fonctionnement.

Selon un premier mode, chaque entrée d'extraction Qpk de chaque module Mpk est couplée à la sortie d'insertion Tpk du même module. Le dispositif est alors transparent à l'égard du multiplex.

Selon un deuxième mode, une entrée d'extraction quelconque sélectionnée Qpk est couplée à la sortie S, ce qui permet l'extraction de longueurs d'onde λs correspondantes du multiplex d'entrée Ep, avec la possibilité de conserver la transparence du dispositif. Si le commutateur comporte plusieurs sorties S, plusieurs entrées d'extraction Qpk, Qpj peuvent être couplées simultanément à plusieurs sorties S, ce qui permet l'extraction en parallèle de plusieurs canaux.

Selon un troisième mode, un canal quelconque du multiplex est extrait comme précédemment mais la sortie d'insertion Tpk correspondante est couplée à une entrée d'insertion R, ce qui permet la modification de ce canal. Si le commutateur comporte plusieurs entrées d'insertion R, il est possible de coupler simultanément plusieurs entrées d'insertion R à plusieurs sorties d'insertion Tpk et donc de modifier en parallèle plusieurs canaux du multiplex.

Dans le cas où les sorties d'insertion Tpk sont couplées directement aux ports d'insertion des modules Mpk, l'insertion d'un canal ne peut s'effectuer qu'à la condition qu'il soit porté par une longueur d'onde λin contenue dans la bande de réjection du filtre le recevant. Pour échapper à cette limitation et selon une variante avantageuse représentée sur la figure 4, les sorties d'insertion Tp1, Tpk, Tpj sont couplées aux ports d'insertion des modules correspondants Mp1, Mpk, Mpj par l'intermédiaire de convertisseurs de longueur d'onde W1, Wk, Wj accordés pour fournir respectivement des longueurs d'onde λ1, λk, λj contenues dans les bandes de réjection des filtres de ces modules. Il en résulte la possibilité d'insérer n'importe quel canal à partir d'un signal porté par une longueur d'onde λin quelconque. Cette disposition permet aussi un autre mode de fonctionnement selon lequel une entrée d'extraction quelconque Qpk d'un des modules Mpk est couplée à la sortie d'insertion Tpj d'un autre module Mpj. Ce mode de fonctionnement permettra donc à un message porté initialement par une première longueur d'onde d'être porté par une autre longueur d'onde en sortie du dispositif.

La réalisation pratique du commutateur K ne présente pas de difficultés particulières une fois définis les modes de fonctionnement souhaités. Comme exposé précédemment, il peut être constitué de portes optiques et de coupleurs selon une configuration découlant de ces modes de fonctionnement.

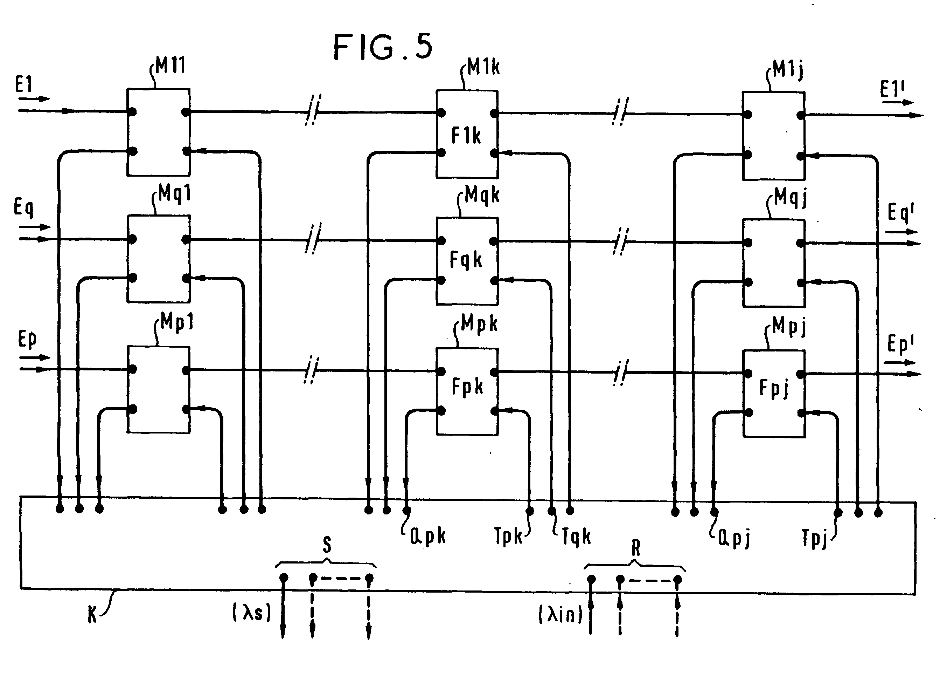

La figure 5 représente un autre mode de réalisation de l'invention permettant de manipuler plusieurs multiplex. Pour cela, pour chaque multiplex E1, Eq, Ep, on prévoit un montage en cascade de plusieurs modules d'extraction et d'insertion tel que décrit précédemment. Comme représenté, l'ensemble peut avoir la structure d'une matrice de modules Mpk, l'indice p désignant un multiplex Ep associé, k étant représentatif d'une longueur d'onde ou d'une bande de réjection du filtre du module considéré.

Le commutateur associé K sera avantageusement conçu pour permettre des transferts de canaux d'un multiplex à un autre. Par exemple, le commutateur pourra être placé dans un état selon lequel l'entrée d'extraction Qpk associée au module Mpk est couplée à la sortie d'insertion Tqk associée au module Mqk. Dans ce cas, à condition bien sûr que les bandes de réjection des filtres Fpk et Fqk des modules concernés aient des bandes de réjection qui se recouvrent au moins partiellement, il sera possible d'extraire un ou plusieurs canaux du multiplex Ep et de les insérer dans le multiplex Eq.

L'utilisation du dispositif sera encore facilitée si l'on couple les sorties d'insertion Tpk au port d'insertion des modules par l'intermédiaire de convertisseurs de longueurs d'onde comme déjà mentionné précédemment en référence à la figure 4. Selon cette variante, il est en effet possible par une simple commande du commutateur d'extraire un canal quelconque d'un des multiplex et de le réinsérer dans un autre multiplex en le faisant porter par une longueur différente de celle d'origine.

L'invention n'est pas limitée au seul mode de réalisation qui vient d'être décrit. En particulier, le commutateur peut être réalisé au moyen d'un dispositif à commande électromécanique. De même, les modules d'extraction et d'insertion peuvent utiliser de simples coupleurs à la place de circulateurs.

## Revendications

1. Dispositif pour extraire d'au moins un multiplex de longueurs d'onde (Ep) l'un au moins des canaux (λk) de ce multiplex (Ep), ce dispositif comportant pour chaque multiplex (Ep), au moins un module (Mpk) d'extraction et d'insertion comportant:
- au moins un filtre réjecteur (Fpk) muni de premier et second ports opposés (Pa, Pb) et accordé sur au moins une des longueurs d'ondes (λk) des canaux du multiplex,
- des moyens de couplage d'entrée (C1) couplés audit premier port (Pa) et comprenant un port d'entrée (P1) apte à recevoir ledit multiplex (Ep) et un port d'extraction (P3), lesdits moyens de couplage d'entrée (C1) étant prévus pour injecter dans le filtre (Fpk) les ondes reçues par son port d'entrée (P1) et pour émettre par son port d'extraction (P3) les ondes reçues dudit premier port (Pa),
- des moyens de couplage de sortie (C2) couplés audit second port (Pb) et comprenant un port de sortie (P4) et un port d'insertion (P6), lesdits moyens de couplage de sortie (C2) étant prévus pour injecter dans le filtre (Fpk) les ondes reçues par son port d'insertion (P6) et pour émettre par son port de sortie (P4) les ondes reçues dudit second port (Pb), ce dispositif étant **caractérisé en ce qu'**il comporte des moyens de commutation optiques (K) comprenant au moins une sortie d'extraction (S) et, pour chaque module (Mpk), une entrée d'extraction (Qpk) couplée audit port d'extraction (P3) et une sortie d'insertion (Tpk) couplée audit port d'insertion (P6) et **en ce que** pour chaque module (Mpk), lesdits moyens de commutation (K) sont aptes à coupler sélectivement ladite entrée d'extraction (Qpk) à ladite sortie d'insertion (Tpk) et/ou à ladite sortie d'extraction (S), et **en ce que** pour l'un au moins desdits multiplex (Ep) , le dispositif comporte plusieurs modules (Mpk, Mpj) d'extraction et d'insertion qui sont montés en cascade et sont munis respectivement de filtres (Fpk, Fpj) ayant des bandes de réjection complémentaires.

2. Dispositif selon la revendication 1, **caractérisé en ce que** lesdits moyens de commutation (K) sont aptes à coupler sélectivement au moins une entrée d'extraction (Qpk) reliée à l'un des modules (Mpk) d'un des multiplex (Ep) à au moins une sortie d'insertion (Tqk) reliée à l'un des modules (Mqk) d'un autre multiplex (Eq).

3. Dispositif selon l'une des revendications 1 ou 2, **caractérisé en ce que** lesdits moyens de commutation (K) comprennent au moins une entrée d'insertion (Rpk) pouvant être couplée sélectivement à au moins une sortie d'insertion (Tpk, Tqk, Tqj).

4. Dispositif selon la revendication 3, **caractérisé en ce que** ladite entrée d'insertion (Rpk) peut être couplée sélectivement à ladite sortie d'extraction (S).

5. Dispositif selon l'une des revendications 1 à 4, **caractérisé en ce qu'**il comporte plusieurs modules (Mpk, Mqk) associés respectivement à plusieurs multiplex (Ep, Eq) et munis de filtres (Fpk, Fqk) ayant la même bande de réjection.

6. Dispositif selon l'une des revendications 1 à 5, **caractérisé en ce que** l'un au moins desdits module (Mpk) a son port d'insertion (P6) relié à une sortie d'insertion (Tqk) par l'intermédiaire d'un convertisseur de longueur d'onde (Wk) fournissant au moins une longueur d'onde (λk) contenue dans la bande de réjection du filtre (Fpk) dudit module (Mpk).

7. Dispositif selon l'une des revendications 1 à 6, **caractérisé en ce que** lesdits moyens de couplage d'entrée ou de sortie (C1, C2) sont des circulateurs.

8. Dispositif selon l'une des revendications 1 à 6, **caractérisé en ce que** chaque module (Mpk) d'extraction et d'insertion est constitué d'un coupleur sélectif en longueur d'onde du type comportant un réseau de Bragg disposé au milieu de sa région de couplage.

## Claims

1. Device for dropping at least one of the channels (λk) of at least one wavelength multiplex (Ep), said apparatus including, for each multiplex (Ep), at least one add-and-drop module (Mpk) comprising:
at least one stop filter (Fpk) provided with first and second opposite ports (Pa, Pb) and tuned to at least one of the wavelengths (λk) of the channels of the multiplex;
inlet coupling means (C1) coupled to said first port (Pa) and provided with an inlet port (P1) suitable for receiving said multiplex (Ep) and with a drop port (P3), said inlet coupling means (C1) being organized to inject into the filter (Fpk) the waves received via their inlet port (P1), and to transmit via their drop port (P3) the waves received from said first port (Pa); and outlet coupling means (C2) coupled to said second port (Pb) and provided with an outlet port (P4) and with an add port (P6), said outlet coupling means (C2) being organized to inject into the filter (Fpk) the waves received via their add port (P6), and to transmit via their outlet port (P4) the waves received from said second port (Pb);
said apparatus being **characterized in that** it includes optical switching means (K) provided with at least one drop outlet (S) and, for each module (Mpk), with a drop inlet (Qpk) coupled to said drop port (P3), and with an add outlet (Tpk) coupled to said add port (P6), and **in that**, for each module (Mpk), said switching means (K) are suitable for selectively coupling said drop inlet (Qpk) to said add outlet (Tpk) and/or to said drop outlet (S), and **in that**, for at least one of said multiplexes (Ep), the apparatus includes a plurality of add-and-drop modules (Mpk, Mpj) that are connected in cascade, and are provided with respective filters (Fpk, Fpj) having complementary stop bands.

2. Device according to claim 1, **characterized in that** said switching means (K) are suitable for selectively coupling at least one drop inlet (Qpk) connected to one of the modules (Mpk) of one of the multiplexes (Ep) to at least one add outlet (Tqk) connected to one of the modules (Mqk) of another multiplex (Eq).

3. Device according to claim 1 or 2, **characterized in that** said switching means (K) are provided with at least one add inlet (Rpk) that can be coupled selectively to at least one add outlet (Tpk, Tqk, Tqj).

4. Device according to claim 3, **characterized in that** said add inlet (Rpk) may be coupled selectively to said drop outlet (S).

5. Device according to any one of claims 1 to 4, **characterized in that** it includes a plurality of modules (Mpk, Mqk) associated with respective ones of a plurality of multiplexes (Ep, Eq) and provided with filters (Fpk, Fqk) having the same stop band.

6. Device according to any one of claims 1 to 5, **characterized in that** at least one of said modules (Mpk) has its add port (P6) connected to an add outlet (Tqk) via a wavelength converter (Wk) delivering at least one wavelength (λk) contained in the stop band of the filter (Fpk) of said module (Mpk).

7. Device according to any one of claims 1 to 6, **characterized in that** said inlet or outlet coupling means (C1, C2) are circulators.

8. Device according to any one of claims 1 to 6, **characterized in that** each add-and-drop module (Mpk) is constituted by a wavelength-selective coupler of the type including a Bragg grating disposed in the middle of its coupling region.

## Patentansprüche

1. Vorrichtung zur Extraktion aus mindestens einem Wellenlängenmultiplex (Ep) mindestens eines Kanals (λk) dieses Multiplex (Ep), wobei diese Vorrichtung für jedes Multiplex (Ep) mindestens ein Add/Drop-Modul (Mpk) umfasst, bestehend aus:
- mindestens einem Sperrfilter (Fpk), der mit ersten und zweiten entgegengesetzten Anschlüssen (Pa, Pb) ausgerüstet und auf mindestens eine der Wellenlängen (λk) der Multiplexkanäle abgestimmt ist,
- Vorrichtungen zur Eingangskopplung (C1), die mit dem genannten ersten Anschluss (Pa) gekoppelt sind und einen Eingangsanschluss (P1), der das genannte Multiplex (Ep) empfangen kann, sowie einen Drop-Anschluss (P3) umfassen, wobei die genannten Vorrichtungen zur Eingangskopplung (C1) dazu vorgesehen sind, die über ihren Eingangsanschluss (P1) empfangenen Wellen in den Filter (Fpk) zu injizieren, sowie die Wellen, die sie an dem genanten ersten Anschluss (Pa) empfangen haben, über ihren Drop-Anschluss (P3) zu versenden,
- Vorrichtungen zur Ausgangskopplung (C2), die mit dem genannten zweiten Anschluss (Pb) gekoppelt sind und einen Ausgangsanschluss (P4) und einen Add-Anschluss (P6) umfassen, wobei die genannten Vorrichtungen zur Ausgangskopplung (C2) dazu vorgesehen sind, die Wellen, die sie über ihren Add-Anschluss (P6) empfangen haben, in den Filter (Fpk) zu injizieren und die Wellen, die sie über den genannten zweiten Anschluss (Pb) empfangen haben, über ihren Ausgangsanschluss (P4) zu versenden,
wobei diese Vorrichtung **dadurch gekennzeichnet ist, dass** sie optische Schaltvorrichtungen (K) umfasst, die aus mindestens einem Drop-Ausgang (S) sowie für jedes Modul (Mpk) aus einem Drop-Eingang (Qpk) bestehen, der mit dem genannten Drop-Anschluss (P3) gekoppelt ist, sowie aus einem Add-Ausgang (Tpk), der mit dem genannten Add-Anschluss (P6) gekoppelt ist, sowie **dadurch**, dass die genannten Schaltvorrichtungen (K) für jedes Modul (Mpk) in der Lage sind, den genannten Drop-Eingang (Qpk) selektiv mit dem genannten Add-Ausgang (Tpk) und/oder dem genannten Drop-Ausgang (S) zu koppeln, sowie **dadurch**, dass die Vorrichtung für mindestens eines der genannten Multiplex (Ep) mehrere Add/Drop-Module (Mpk, Mpj) umfasst, die in Kaskade geschaltet und jeweils mit Filtern (Fpk, Fpj) ausgerüstet sind, die komplementäre Sperrbänder aufweisen.

2. Vorrichtung gemäß Anspruch 1, **dadurch gekennzeichnet, dass** die genannten Schaltvorrichtungen (K) in der Lage sind, mindestens einen Drop-Eingang (Qpk), der mit einem der Module (Mpk) eines der Multiplex (Ep) verbunden ist, selektiv mit mindestens einem der Add-Ausgänge (Tqk), die mit einem der Module (Mqk) eines anderen Multiplex (Eq) verbunden sind, zu koppeln.

3. Vorrichtung gemäß einem der Ansprüche 1 oder 2, **dadurch gekennzeichnet, dass** die genannten Schaltvorrichtungen (K) mindestens einen Add-Eingang (Rpk) umfassen, der selektiv mit mindestens einem Add-Ausgang (Tpk, Tqk, Tqj) gekoppelt werden kann.

4. Vorrichtung gemäß Anspruch 3, **dadurch gekennzeichnet, dass** der genannte Add-Eingang (Rpk) selektiv mit dem genannten Drop-Ausgang (S) gekoppelt werden kann.

5. Vorrichtung gemäß einem der Ansprüche 1 bis 4, **dadurch gekennzeichnet, dass** sie mehrere Module (Mpk, Mqk) umfasst, die jeweils mehreren Multiplex (Ep, Eq) zugeordnet und mit Filtern (Fpk, Fqk) ausgerüstet sind, die das gleiche Sperrband aufweisen.

6. Vorrichtung gemäß einem der Ansprüche 1 bis 5, **dadurch gekennzeichnet, dass** der Add-Anschluss (P6) mindestens eines der genannten Module (Mpk) über einen Wellenlängenwandler (Wk), der mindestens eine Wellenlänge (λk) liefert, die in dem Sperrband des Filters (Fpk) des genannten Moduls (Mpk) enthalten ist, mit einem Add-Ausgang (Tqk) verbunden ist.

7. Vorrichtung gemäß einem der Ansprüche 1 bis 6, **dadurch gekennzeichnet, dass** es sich bei den genannten Vorrichtungen zur Eingangs- oder Ausgangskopplung (C1, C2) um Zirkulatoren handelt.

8. Vorrichtung gemäß einem der Ansprüche 1 bis 6, **dadurch gekennzeichnet, dass** jedes Add/Drop-Modul (Mpk) aus einem Koppler mit selektiver Wellenlänge mit einem Bragg-Netz besteht, das in der Mitte seines Kopplungsbereichs angeordnet ist.
